# EUROPEAN PATENT APPLICATION

(11) **EP 1 044 892 A2**
(43) Date of publication of application: **18.10.2000**
(21) Application number: 00303150.7
(22) Date of filing: 14.04.2000
(51) Int. Cl.: B65D 81/26

(54) **Padded bags and method of transporting an article containing liquid**

(30) Priority: 14.04.1999 GB 9908423
(71) Applicant: JIFFY PACKAGING COMPANY LIMITED, Winsford, Cheshire CW7 3QR (GB)
(72) Inventor: Bowen, James Henry Edward, Horsham West Sussex RH12 3HG (GB)
(74) Representative: Lally, William

(57) **Abstract**

In the transportation of an article which contains liquid, to avoid hazard caused by liquid leaking from the bag, a bag is utilised comprising a liquid resistant outer wall and an inner layer of an absorbent material. Thus free liquid within the bag, which may be caused by a container within the bag breaking, will be absorbed by the absorbent material, and the outer wall will prevent water from flowing from the bag to any significant extent, for a desired length of time. Preferably the outer wall comprises a coating of plastics material, and the inner layer comprises absorbent material and super-absorbent material.

## Description

### Description of Invention

This invention is concerned with improvements relating to padded bags of the kind used to transport articles during transportation, the term "bags" including envelopes, and the like.

Conventional padded bags, such as the "Jiffy" bag, comprises outer walls of (eg.) Kraft (a heavy duty paper-like material) and an inner wall of a lighter material, such as Kraft paper, cushioning material being provided between the inner and outer walls. The cushioning material may comprise a layer of macerated paper, or a layer of foam plastics. Alternatively, the bag may comprise an outer layer of Kraft, and an inner layer of "bubble" material.

Thus conventionally on the interior of a conventional padded bag a surface is provided which is either of Kraft, which is high density and has a smooth (shiny) surface finish, or is provided by plastics material.

Where articles are to be transported which contain liquids, should the article break, releasing the liquid, the liquid will not tend to be absorbed by the material of the bag, but will escape from the bag.

Particularly where biological materials are contained in the article (such as urine or blood), this presents an unacceptable hazard to (eg.) postal workers.

Such problems have in the past been overcome by utilising heavily padded bags, or by placing one bag within another. However where articles containing a large quantity of liquid are to be transported (the term "large" in this context meaning 0.1 litre or more) padded bags have not been used, and the article has been transported in a rigid container, surrounded by cushioning material.

Consequently it is one of the objects of this invention to provide a padded bag which may be utilised satisfactorily in the transportation of articles containing liquids, including large quantity of liquids, in which a hazard presented in the event that the article is broken, and the liquid is released, is reduced.

According to this invention there is provided a padded bag comprising a liquid resistant outer wall and an inner layer of an absorbent material.

By the term "liquid resistant" as used herein we mean that the outer wall will prevent passage of liquid to any significant extent for at least one hour, preferably ten hours or more.

Thus should an article containing liquid and being transported in a bag break, the liquid will be absorbed by the inner layer, with the outer wall preventing leakage of the liquid from the padded bag for a sufficient length of time.

The extent of liquid resistance provided by the outer wall will be dependant upon the nature of the hazardous article to be transported, and the degree of protection required. For example, where water based materials are being transported internally (eg. from one department of a hospital or laboratory to another), the necessary resistance may be provided by an outer wall of high density paper having a smooth surface finish, such as Kraft.

Alternatively where a higher degree of liquid resistance is required, the outer wall of the bag may comprise a coating of plastics material, or be provided by plastics material.

Preferably the outer wall comprises a layer of paper-based material (such as Kraft), and a coating of plastics material provided on the paper-like layer. The coating may if desired be provided on the interior of the layer of paper-like material, but is preferably provided on the outer surface of said layer, whereby the paper-like material may itself effect some absorbent action.

Preferably the bag comprises a substantially liquid-tight seal around connected edge regions thereof, and means to provide a substantially liquid-tight seal at the opening of the bag.

Preferably the absorbent material comprises at least one layer of tissue, preferably a plurality of layers of tissue.

Preferably the bag comprises one or more additional absorbent elements, which may be granular, powder or fibrous.

Particularly suitable as additional absorbent element is a polymeric material of a kind which when contacted with water-based liquids, forms a gel.

Preferably where the inner layer comprises tissue, additional absorbent elements may be located on the layer of tissue, and/or where the inner layer comprises a plurality of plies, between the plies of tissue.

Alternatively or in addition the bag comprises one or more additional absorbent elements between the outer wall and the inner layer. Such additional absorbent element may comprise relatively inexpensive material such as a layer of macerated or ground paper fibres.

Thus adequate cushioning of an article during transportation is provided by the padded bag, but the means for providing cushioning is also effective to absorb liquid which may have become free in the event that the article breaks.

According to this invention there is also provided a padded bag comprising an outer wall comprising a coating of plastics material and an inner layer of an absorbent material.

According to this invention there is also provided a method of transporting an article containing a liquid involving the use of a padded bag comprising an outer wall comprising an outer layer of water resistant material and an inner layer, which contacts the article in the bag, and which is absorbent.

There will now be given a detailed description, to be read with reference to the accompanying drawings, of a padded bag which is a preferred embodiment of this invention, having been selected for the purposes of illustrating the invention by way of example.

In the accompanying drawings:
FIGURE 1 is a plan view of a sheet of composite material utilised to manufacture the padded bags;

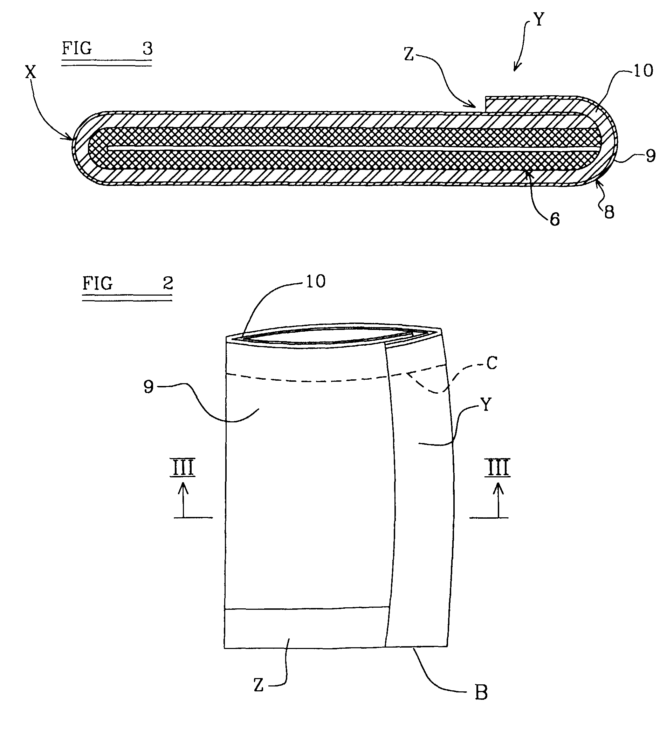

FIGURE 2 is an elevational view of the padded bag; and
FIGURE 3 is a sectional view taken on the line III-III of Figure 2, showing the interior construction of the bag.

The padded bag which is the preferred embodiment of this invention is produced from a sheet 4 comprising an inner layer or wall 6 and an outer layer or wall 8. The outer wall is afforded by a heavy-duty paper-like material, such as Kraft having on its outer surface a continuous layer 9 of plastics material, specifically polyethylene.

The inner layer 6 comprises a plurality of layers or plies of tissue, having interspersed on and between the layers super absorbent elements, which may be granular, powder or fibrous.

Additionally between the outer layer 8 and the inner layer 6 is an intermediate layer 10 which is in the form of a batt of macerated and ground paper lightly bonded to the inner layer of the Kraft of the outer wall. The intermediate layer may additionally be provided with super-absorbent material.

As super-absorbent material, a polyacrylic acid salt may be utilised, such as cross-linked sodium polyacrylate. Such materials may be in powder form, or fibrous.

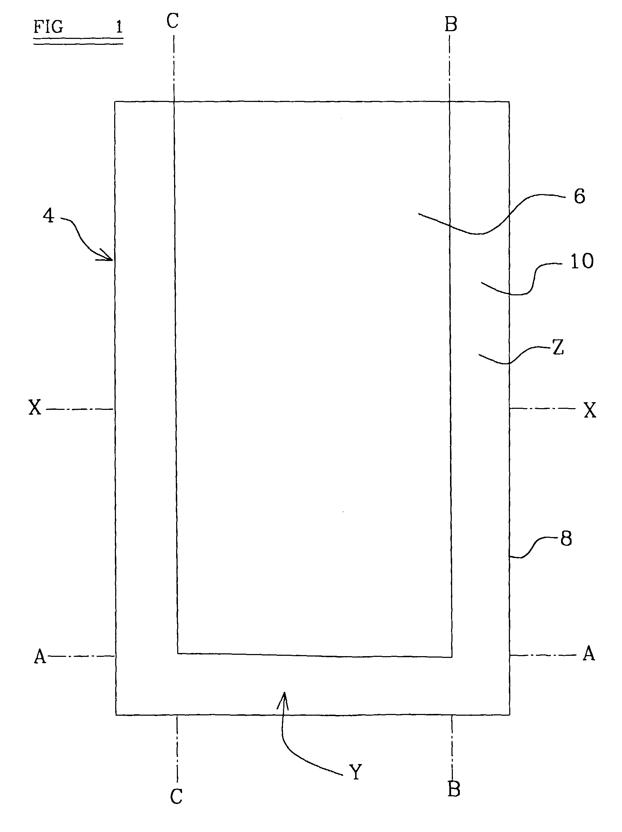

As will be seen from Figure 1 whilst conveniently the intermediate layer extends the full width of the sheet 8 of Kraft, whilst the inner layer 6 extends primarily over a central region, specifically being spaced from the outer edges of the sheet 4 along three sides.

In the manufacture of a padded bag from the sheet so formed, the sheet 4 is folded about a line X slightly off centre, and one edge margin Y of the sheet is then folded about a fold line A-A and is adhered to an opposite edge margin by the use of adhesive, to form an elongate tube.

One end margin Z is folded over about a fold line B-B and secured by adhesive to seal the end, whilst the opposite end is retained open, for the insertion of an article into the padded bag. When the article to be protected has been inserted, the open end may similarly be folded down, conveniently about a fold line C-C, and secured in a closed position by (eg.) a self-seal strip, by a locking, sliding plastic seal, or the like.

Whilst in the preferred embodiment the inner layer 6 of super absorbent material is removed from the peripheral region of the sheet 4 around three sides, enabling less bulky seals to be produced at the side and edge margins of the bag, if desired the intermediate layer 10 may also be removed from the sheet 4 around said edge margins, whereby the Kraft of the outer wall is itself bonded to itself, in the closure of the bag. In this manner, problems of run-out and wicking may be completely avoided.

In this manner the material which is utilised to provide the cushioning and hence the protection to the article being transported in the bag additionally effects an absorption of liquid should the article in the bag become broken, and additionally carries additional materials to provide even further absorption capability.

By ensuring that the various closures of the bag are predominantly leakproof, should a spillage occur within the bag, the liquid will be distributed over the whole of the absorbent materials of the bag, minimising the possibility of a hazard to a person handling the bag.

In particular, it has been found that by the use of the invention, where specifically the super-absorbent material is sodium polyacrylate sold by Stockhausen GmbH under the trade name "Favor-Pak", having a granule size of 100-800 microns, a padded bag which is 20 x 30mm may be provided with the capability of absorbing up to 2 litres of liquid.

Whilst in the preferred embodiment the layer 9 of polythene provided on the outer surface of the bag provides a substantial degree of impermeability, the invention may be put into practice particularly in circumstances where protection is required to a lesser extent, by utilising an outer layer which is simply resistant to the passage of liquid. Thus where the outer layer of polythene is omitted, and the outer surface of the bag is provided by a heavy duty, high density paper-like material such as Kraft, leakage of liquid from within the bag may be prevented for at least one hour and, depending of course on the nature of the liquid within the padded bag, up to ten hours.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A padded bag comprising a liquid resistant outer wall (8, 9) and an inner layer (6, 10) of an absorbent material.

2. A padded bag according to claim 1 wherein the outer wall (8) comprises high density paper having a smooth surface finish.

3. A padded bag according to claim 1 wherein the outer wall of the bag comprises a coating (9) of plastics material.

4. A padded bag according to any one of the preceding claims comprising a substantially liquid-tight seal around connected edge regions thereof, and means to provide a substantially liquid-tight seal at the opening of the bag.

5. A padded bag according to any one of the preceding claims wherein the absorbent material comprises at least one layer of tissue.

6. A padded bag according to any one of the preceding claims wherein the bag comprises one or more additional absorbent elements.

7. A padded bag according to claim 6 wherein said additional absorbent element is selected from the group consisting of granular material, powderous material, fibrous material, polymeric material and materials which when contacted with water-based liquids form a gel.

8. A padded bag according to any one of the preceding claims where the inner layer comprises tissue, and additional absorbent elements are located on the layers of tissue, or between the plies of tissue.

9. A padded bag according to any one of the preceding claims comprising one or more additional absorbent element between the outer wall and the inner layer.

10. A padded bag according to claim 9 wherein said additional absorbent element comprises macerated or ground paper fibres providing cushioning for an article during transportation.

11. A padded bag comprising an outer wall comprising a coating of plastics material, and an inner layer of absorbent material.

12. A method of transporting an article containing a liquid involving the use of a padded bag comprising an outer wall comprising an outer layer of water resistant material and an inner layer, which contacts the article in the bag, which is absorbent.
